# EUROPEAN PATENT APPLICATION

(11) **EP 4 830 525 A1**
(43) Date of publication of application: **28.10.2026**
(21) Application number: 25171954.8
(22) Date of filing: 23.04.2025
(51) Int. Cl.: A22C 11/12, B65B 19/34, B65B 25/04, B65B 51/04, B65B 51/14, B65B 9/15, B65B 25/06, B65B 25/16, B65C 7/00

(54) **CLIPPING TOOL ASSEMBLY WITH LABEL HANDLING ARRANGEMENT**

(71) Applicant: Poly-clip System GmbH & Co. KG, 65795 Hattersheim (DE)
(72) Inventor: Melchert, Uwe, 60385 Frankfurt am Main (DE); Lerose, Santino, 61381 Friedrichsdorf (DE)
(74) Representative: Eisenführ Speiser

(57) **Abstract**

The invention relates to a clipping tool assembly (1) comprising: a gathering unit (2, 34) for forming a plait-like portion (PP) of a packaging (P) in a closing region (4), a clipping tool arrangement comprising a first pair of clipping tools (24) for applying at least one closure means to the plait-like portion (PP) provided in the closing region (4), and a label handling arrangement (56) for positioning a label (L) to be attached to the packaging (P) in the closing region (4), wherein the label handling arrangement (56) is configured to allow reorientation of the label (L) from a first orientation (74) to a second orientation (76) during gathering of the packaging (P). The invention further relates to a clipping machine and to a method (200) for packaging a filling into a packaging including at least one label (L).

## Description

The invention relates to a clipping tool assembly for closing at least one closure means, like a closure clip, in a packaging machine for closing tubular or bag-shaped packaging containing filling, in particular a loose filling like fruit or vegetables, the clipping tool assembly comprising: a gathering unit for forming a plait-like portion of the packaging, the gathering unit comprising a primary gathering tool and a secondary gathering tool, wherein the primary gathering tool is movable towards the secondary gathering tool for gathering the packaging in a closing region and for forming the gathered packaging into a plait-like portion, a clipping tool arrangement comprising a first pair of clipping tools including a primary clipping tool and a secondary clipping tool for applying at least one closure means to the plait-like portion provided in the closing region by linearly reversibly moving the primary clipping tool along a closing axis towards the secondary clipping tool. The invention further relates to a clipping machine having such a clipping tool assembly and to a method for packaging a filling into a packaging including at least one label.

Clipping machines are used for producing sausage-shaped products filled with a coherent filling, like sausages, and/or for closing a bag shaped or sausage shaped packaging filled with an incoherent filling or loose filling respectively, like fruit or vegetables. To produce such products, a filling is fed into a tubular packaging or packaging casing which is stored as a supply on a filling tube or filling chute, and which is closed at its front end. Filling material is filled into the tubular or bag shaped packaging casing through the filling tube or filling chute. The feeding pressure of the filling material, a provided drawing unit and/or the weight of the filling material draws the casing from the filling tube or filling chute. After a predetermined amount and/or quantity of filling material has been filled into the tubular packaging casing, a portion of the packaging casing is gathered into a plait-like portion that is at least substantially free from filling material. For closing the packaging just filled, at least one first closure means is provided to and closed around said plait-like portion by the clipping machine. Additionally, at least one second closure means may be provided for closing the front end of the packaging and/or product to be produced next. Subsequently, the filled packaging can be separated from the remaining supply of packaging and the filled packaging can be discharged from the clipping machine. Discharge of the filled packaging or product may be employed by gravity and/or by a discharge device such as a conveyor. Net bags are a typical example that are filled in this way. Such net bags are often used for packaging fresh produce like oranges.

Loose goods or foods, such as fruit or vegetables, are often packed into bags of netting material, which may be made of plastic. If such tubular or bag-shaped packaging consisting of a netting is closed by a closure means, which itself may be made of plastic, the closure means may slip off the plait-like portion of the tubular or bag-shaped packaging material due to small frictional forces between the bag material and the clip. Sometimes, profiles or elements that increase friction between the closure means and the packaging are provided on the inner side of the closure means to increase a holding strength of the closure means. For example, such profiles or elements can take the form of serrations. There are also closure means, in particular closure clips, that comprises one or more spikes digging into the packaging material and thus reliably preventing the closure clip from slipping off the packaging material. While features of the closure means that increase the friction between the packaging and the closure means can help to ensure secure closure of the packaging, there is still room for improvement.

Often the filled net bags are provided with a label. For example, a label can provide information on the contents of the packaging such as a total weight of filled in produce or the like. In many cases, the labels are provided with a bar code used for registering the packaging at a checkout. Secure attachment of the label is therefore important as it might not be possible to sell a packaging without the label. In practice, it is known to apply a label to the packaging while closing the packaging with a closure means. The closure means that closes the packaging secures the label to the packaging. This, however, can lead to problems. For example, the label can reduce the contact area between the closure means and the packaging and can thus increase the risk of the closure means slipping off the plait-like portion. Moreover, there is a risk that the closure means, in particular a friction enhancing feature of the closure means such as a spike, damages the label, since the labels are usually relatively thin. The label that is often subjected to high forces, for example when the packaging is picked up or carried on the label, can easily tear.

It is therefore an object of the present invention to provide a clipping tool assembly which allows secure attachment of a label to a packaging.

According to a first aspect, the mentioned object is achieved by a clipping tool assembly having the features of independent claim 1. According to a second and third aspect, the invention solves the above-mentioned problem with a clipping machine as defined in independent claim 12 and with a method for packaging a filling into a packaging as defined in independent claim 13. Other advantageous developments of the clipping tool assembly are described in dependent claims 2 to 11. Preferred embodiments of the inventive method are described in dependent claims 14 and 15.

According to the present invention a clipping tool assembly for closing at least one closure means, like a closure clip, in a packaging machine for closing tubular or bag-shaped packaging containing filling, in particular an incoherent filling and/or loose filling, like fruit or vegetables, is proposed. The clipping tool assembly comprises a gathering unit for forming a plait-like portion of the packaging, the gathering unit comprising a primary gathering tool and a secondary gathering tool. The primary gathering tool may be movable towards the secondary gathering tool for gathering the packaging in a closing region and for forming the gathered packaging into a plait-like portion. The clipping tool assembly further comprises a clipping tool arrangement comprising at least a first pair of clipping tools including a primary clipping tool and a secondary clipping tool for applying at least one closure means to the plait-like portion provided in the closing region by linearly reversibly moving the primary clipping tool along a closing axis towards the secondary clipping tool. The clipping tool assembly further comprises a label handling arrangement for positioning a label to be attached to the packaging by the closure clip in the closing region. Preferably, the label handling arrangement is configured to allow reorientation (or shifting respectively) of the label from a first orientation to a second orientation, in particular during gathering of the packaging to the plait-like portion.

The inventors have found that allowing the orientation of the label to be changed can prevent damages to the label. The label is preferably provided to the closing region in a first orientation. Then, when the packaging is gathered to form a plait-like portion, the orientation of the label shifts from the first orientation to the second orientation.

A reorientation of the label includes a change of the label orientation. In the context of the present disclosure, the term "shift" or "shifting" is also used to describe a reorientation. For example, the shifting motion may include a rotation of the label around its longitudinal label axis. In the context of the present disclosure, a mere displacement of the label is not a reorientation. The clipping tool arrangement does not prevent the shifting motion of the label.

For example and preferably, the label handling arrangement is configured such that a first section of the label is supported by the label handling arrangement and such that a second section of the label is a free section that is unsupported. The first section and the second section of the label are sections in a width direction of the label perpendicular to a longitudinal axis of the label. Preferably, the label handling arrangement is configured to provide the label to the closing region such that the label extends beyond a support portion of the label handling arrangement. Preferably, the label handling arrangement is configured to position the label, preferably the free section of the label, in a gathering path of the plait-like portion. The plait-like portion or the portion of the packaging forming the plait-like portion after gathering can then engage the label during gathering and can actively shift the label from the first orientation to the second orientation. Shifting of the label may then be achieved without an additional actuator. Preferably, the clipping arrangement is configured to allow rotation of the label from the first orientation to the second orientation, in particular rotation around a longitudinal axis of the label. In other words, the shifting of the label from the first orientation to the second orientation preferably comprises a rotation of the label.

The primary clipping tool can include a punch. The primary clipping tool can be configured for supplying the closure means to the closing region and for closing the closure means. Preferably, the primary clipping tool is configured to at least partially carry or transport a closure means from a feed position to the closing region. The feed position may be defined by a clip window through which a closure means is provided to a tool track of the primary clipping tool. For example, the primary clipping tool can pass the feed position and can push a closure means from the feed position towards the closing region as well as towards the die positioned in the closing region in its engagement position. The secondary clipping tool can include the die.

The closing region is a region of the clipping tool assembly in which the primary clipping tool and the secondary clipping tool collaborate to close the closure means. It shall be understood that the closing region can be an open space defined by the primary clipping tool, the secondary clipping tool and/or the gathering unit and/or other elements or portions of the clipping tool assembly. Usually, the plait-like portion of the packaging to be closed is located in the closure region and the primary clipping tool as well as the secondary clipping tool are moved to the closing region for closing the closure means at the plait-like portion.

It shall be noted, that the pair of clipping tools can comprise additional elements besides the primary clipping tool and the secondary clipping tool. The term "pair" does not limit the number of elements the pair of clipping tools can comprise.

In a first preferred embodiment, a label width of the label extends parallel to the closing axis in the second orientation. Usually, sheet like labels are used that have a much larger label width and label length in comparison to a label thickness. When the label width extends parallel to the closing axis, the label only has a very small profile when viewed along the closing axis. The label thus provides only a very small area of attack. The primary clipping tool and/or a closure means moved by the closure tool towards the secondary clipping tool are then less likely to damage the label.

In the first orientation, the label width of the label preferably extends substantially transverse to the closing axis. When the label width is substantially transverse to the closing axis in the first orientation, accurate placement of the label in the closing region is facilitated.

Preferably, the length of the label or a longitudinal axis of the label respectively extends substantially transverse to the closing axis in the first orientation and/or in the second orientation.

In a preferred embodiment, the label handling arrangement comprises a label guide configured to guide the label during shifting or reorientation respectively from the first orientation to the second orientation. The label guide is configured to contact the label. In particular, the label can abut the label guide during the shifting motion form the first orientation to the second orientation. Providing a label guide prevents uncontrolled movement of the label and ensures proper alignment. For example, the label guide can prevent the label from folding over itself.

Preferably, the label guide is configured to guide the label such that during gathering of the packaging, the at least partially gathered packaging shifts the label from the first orientation to the second orientation.

In a preferred configuration, the label guide comprises a guide head. The guide head is configured to abut the label at least during a part of its motion from the first orientation to the second orientation. Preferably, the guide head comprises a first guide surface extending in the first orientation and a second guide surface extending in the second orientation. The first guide surface can be parallel to the filling axis and perpendicular to the closing axis. The second guide surface can be parallel to the filling axis and the closing axis. A curved guide surface can be provided between the first guide surface and the second guide surface. The guide head can comprise a stopper surface that defines an end position of the label in the second orientation. For example, the stopper surface can extend substantially perpendicular to the second orientation. A lateral side of the label can then abut the stopper surface and prevent the label from being displaced. Preferably, the curved guide surface is continuously curved. The curved guide surface can have a constant curvature. For example, the curved guide surface can have the shape of a quarter of mantle surface of a cylinder.

According to a preferred embodiment, the guide head of the label guide is displaceable in at least a first direction. A guide head that is configured to be displaced can be moved out of position if another element provides a force onto the guide head. In other words, the guide head can be yielding in at least the first direction. Preferably, the label guide is displaceable at least in the first direction by the plait-like portion. The guide head can be configured to cushion the label and/or the plate-like portion. Compared to a rigid guide head, the displaceable guide head can be moved out of the way once the plait-like portion has engaged the label. A displaceable guide head can increase a contact are with the label and can prevent misalignments of the label before the plait-like portion engages the label. Once the plait-like portion shifts the label from the first orientation to the second orientation, the guide head is displaced and a strain on the plait-like portion and/or the label can be reduced. Preferably, the guide head is flexibly held such that it can be displaced by the plait-like portion and/or the label. Preferably, the guide head is displaceable in a first direction and rigid in a second direction. Preferably, the first direction is transverse to the closing axis.

Preferably, the guide head is configured to act as a damper for the label and/or the plait-like portion in a first direction.

In a preferred configuration, the guide head is movable along a label guide axis from a retracted position to a guide position for guiding the label. In this configuration, the guide head can be removed from the closing region when packaging units without a label are produced. A movable guide head increases versatility of the machine and/or reduces the time required to adapt the clipping tool assembly to different products and/or labels. Preferably, the label guide comprises an actuator for moving the guide head from the retracted position to the guide position and/or for moving the guide head from the guide position to the retracted position. In the retracted position, the guide head is removed from the closing area and/or in a position in which the guide head does not contact the label or plait-like portion during the gathering operation.

The actuator can be a pneumatic actuator. Preferably, the actuator allows play along the label guide axis in a range of 20 mm or less, preferably 15 mm or less, preferably 10 mm or less. The actuator may act as a damper.

In some preferred embodiments, the clipping tool assembly further comprises a second pair of clipping tools, spaced from the first pair of clipping tools along a filling axis. The filling axis is an axis of the clipping tool assembly along which the packaging extends and/or along which the filling is filled into the packaging. A clipping tool assembly comprising two pairs of clipping tools can be referred to as a double clipping tool assembly. Preferably, the second pair of clipping tools is substantially identical to the first pair of clipping tools. For example and preferably, the second pair of clipping tools can comprise a second primary clipping tool and a second secondary clipping tool. Preferably, the guide head is at least partially sandwiched between the first pair of clipping tools and the second pair of clipping tools along the filling axis. It shall be understood that a sandwiched arrangement does not require contact between any of the pair of clipping tools and the guide head. The sandwiched arrangement rather describes a positioning of the guide head between the pairs of clipping tools with regard to the filling axis. A clipping tool assembly comprising a second pair of clipping tool is also preferred for configurations without a guide head and/or configurations with a guide head that is not sandwiched between the pairs of clipping tools.

Preferably, the clipping tool assembly comprises a cutting device for severing the plait-like portion. The cutting device is provided for separating a filled packaging from the remaining packaging material. Preferably, the cutting device is movable along a cutting axis for cutting the plait-like portion. The guide head can comprise a blade groove for at least partially receiving the cutting device. Preferably, the cutting device can extend into the blade groove when the cutting device is in a cutting position.

In preferred embodiments, the label guide comprises a guide roller rotatable around a roller axis. The guide roller can support the label during its shifting motion from the first orientation to the second orientation. Preferably, the roller axis extends perpendicular to the closing axis. The guide roller can have a high friction surface or coating. For example, the guide roller can be made of rubber or can have a rubber surface. The high friction surface can help to securely hold the label on the guide roller. Preferably, the guide roller is a free roller that can freely rotate about the roller axis.

The guide head, particularly preferred the guide roller, can be configured to hold the label. For example, the guide head can comprise suction cups, electrostatic holding means, or the like that help to hold the label on the guide head. It is also possible that the guide head has vacuum nozzles to which a (partial) vacuum can be applied for holding the label.

The label handling arrangement can comprise a label feed configured to provide the label to the closing region in the first orientation. The label feed can comprise at least one feed roller, preferably a pair of feed rollers. The pair of feed rollers can engage a label strand on both sides. A feed roller may be driven for conveying the labels.

In a preferred configuration of the clipping tool assembly, the primary gathering tool is movable towards the secondary gathering tool along a gathering axis. The closing axis and the gathering axis are preferably substantially parallel to each other. The primary gathering tool and the primary clipping tool can then preferably advance towards the closing region from opposite sides. The secondary clipping tool can be movable. For example, the secondary clipping tool can be movable from a neutral position to an engagement position in the closing region, preferably by a secondary clipping tool drive. A movement axis of the secondary clipping tool can include an angle with the gathering axis and/or the closing axis. A movable secondary clipping tool can be moved to the neutral position to facilitate gathering the packaging into the plait-like portion along the gathering axis. Once the gathered packaging or plait-like portion is received in the closing region, the die can move into the engagement position for closing the closure means.

In preferred configurations, the primary gathering tool is a stationary gathering tool. A stationary primary gathering tool facilitates control of the clipping tool assembly. A gathering region can be defined accurately. The primary gathering tool and/or the secondary gathering tool can be formed as or comprise a gathering plate. The gathering plate can be substantially planar in a direction perpendicular to a filling axis. The filling axis extends along the plait-like portion in a direction in which the filling is filled into the packaging. If the filling is provided into the packaging through a filling pipe or filling chute, the longitudinal axis of the filling pipe may define the filling axis.

Preferably, the primary gathering tool and/or the secondary gathering tool comprise an inner gathering contour. In particular, the gathering plate can comprise a gathering contour. The inner gathering contour of the primary gathering tool can define a narrow portion and a wide portion of the closing region. The narrow portion is narrower in at least one dimension than the wide portion. Preferably, the narrow portion has a free width transverse to the closing axis and the filling axis that is smaller than a corresponding free width of the wide portion. In particularly preferred embodiments, the narrow portion of the closing region is located upstream of the wide portion with regard to a travel of the primary clipping tool along the closing axis towards the secondary clipping tool. That is when the primary clipping tool advances towards the secondary clipping tool it reaches the narrow portion before it reaches the wide portion. An inner gathering contour having a wide and a narrow portion can facilitate gathering of the packaging into the plait-like portion.

In a preferred further development the clipping tool arrangement comprises a tool track guiding the primary clipping tool at least along a portion of its travel along the closing axis from an open position towards a closing position. Preferably, the narrow portion is provided in the tool track. The wide portion is preferably provided adjacent the tool track, particularly preferred adjacent the tool track in the closing direction. A plait-like portion can then be provided to the narrow portion by the gathering unit and can be engaged in a defined position. For example and preferably, the primary clipping tool can be configured to at least partially carry or transport a closure means from a feed position to the closing region along the tool track. The tool track can be configured such that legs of a closure means are received in guide grooves of the tool track. This can ensure that the legs of the closure means glide past the plait-like portion and/or the label when the closure means is pushed along the closing axis by the primary clipping tool.

Preferably, the label handling arrangement is configured such that the label is provided in the wide portion of the closing region in the first orientation and such that the label can be pushed to the narrow portion of the closing region in the second orientation by the plait-like portion upon actuation of the gathering unit.

The guide head of the label guide can be provided at a transition of the narrow portion and the wide portion defined by the gathering contour of the primary gathering tool.

In some embodiments, the gathering contour of the primary and/or secondary gathering tool can be tapered. The tapered gathering contour of the primary gathering tool and the secondary gathering tool preferably taper in opposite directions.

According to a second aspect, the invention solves the above-mentioned problem with a clipping machine including a clipping tool assembly according to any of preferred embodiments of the first aspect of the invention. It shall be understood that the clipping machine according to the second aspect of the invention and the clipping tool assembly according to the first aspect of the invention comprise similar and identical embodiments which are in particular described in the dependent claims. In so far, reference is made to the above description of the clipping tool assembly according to the first aspect of the invention.

In a third aspect, the invention solves the above-mentioned problem with a method for packaging a filling into a packaging including at least one label with a clipping machine, preferably a clipping machine according to the second aspect of the invention. The method preferably comprises at least one of the following steps:
Providing a tubular or bag-shaped packaging closed at a first packaging end; filling products into the packaging along a filling axis; providing a label extending along the filling axis in a first orientation in a closing region defined by a clipping tool assembly of the clipping machine, wherein a label width of the label extends transverse to a closing axis of the clipping tool assembly; gathering a portion of the filled packaging into a plait-like portion with a gathering unit; reorienting (or shifting) the label from the first orientation to a second orientation with the plait-like portion; and moving a primary clipping tool of the clipping tool arrangement along the closing axis towards a secondary clipping tool of the clipping tool arrangement for applying a closure means to the plait-like portion such that the packaging is closed at a second packaging end opposite the second packaging end, wherein the label is secured to the plait-like portion by the closure means. In the method according to the invention, the at least partially gathered plait-like portion shifts the label from the first orientation to the second orientation. The shifting of the label is effected by the gathering unit and it is not necessary to provide an additional manipulator for the label. Overall design of the clipping tool assembly is simplified. Moreover, shifting the label with the plait-like portion to which it is later attached can help to ensure proper positioning of the label on the plait-like portion.

In a preferred embodiment of the inventive method, the label width of the label extends substantially parallel to the closing axis in the second orientation of the label. Preferably, the gathering unit comprises a primary gathering tool that moves along a gathering axis for gathering the packaging into the plait-like portion. The gathering axis is preferably parallel to the closing axis.

Preferably, the closure means does not penetrate the label. The label is then held on the closed packaging by friction. Since the closure means does not penetrate the label, the label is not weakened by punctures. The risk that the label rips when subjected to forces can be reduced significantly.

In the second orientation, the label is preferably provided adjacent the closing axis or besides the closure axis respectively. Preferably, the primary clipping tool moves the closure means along the closing axis.

Preferably, the closure means comprises a base, two legs extending from opposite ends of the base and at least one spike extending from the base in between the legs. The legs and the at least one spike extend in substantially the same direction from the base of the closure means. However, it shall be noted that the legs can diverge from each other. Preferably, the spike does not penetrate the label. Additionally or alternatively, the label is received between the spike and one of the legs upon closure of the closure means by the clipping tools.

For a more complete understanding of the invention, the invention will now be described in detail with reference to the accompanying drawings. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed herein after. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The word "a" or "an" does not exclude the plurality. The wording "a number of" items comprising also the number 1, i.e. a single item, and further numbers like 2, 3, 4 and so forth.

In the accompanying drawings some elements or parts of the clipping tool assembly can be omitted for illustrative purposes. In the accompanying drawings:
- Fig. 1: is a schematic front view of a clipping tool assembly;
- Fig. 2: is a schematic side view of the clipping tool assembly;
- Fig. 3: is a schematic front view showing a detail of the clipping tool assembly;
- Fig. 4: is a schematic view of a section of the clipping tool assembly with a gathering unit removed and a secondary clipping tool of the clipping tool assembly in a neutral position;
- Fig. 5a to 5e: are schematic rear views of the clipping tool assembly illustrating a gathering operation;
- Fig. 6: is a perspective view of a detail of the clipping tool assembly;
- Fig. 7: is a schematic front view of an inside of the clipping tool assembly; and
- Fig. 8: is a block diagram illustrating a method for packaging a filling into a packaging including at least one label.

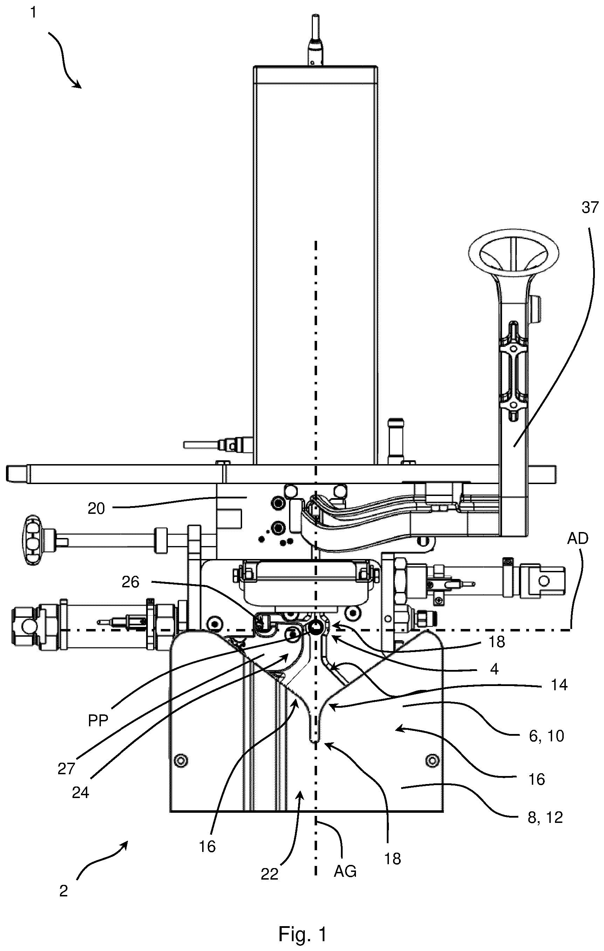

Fig. 1 shows an embodiment of a clipping tool assembly 1 for closing at least one closure means, like a closure clip C in a packaging machine (the packaging machine is not shown in the figures). The clipping tool assembly 1, which may also be referred to as clipping head, comprises gathering unit 2 for gathering packaging material. For example, the clipping tool assembly 1 can be used for closing net bags that are filled with fruit or vegetables. Loose fillings like large fruit, such as oranges, provide challenges to the gathering unit 2 as the gathering unit 2 must provide enough clearance to allow the filling to be filled into the packaging P. The gathering unit 2 is configured to gather a tubular or bag-shaped packaging material, such as a packaging net, together to form a plait-like portion PP in a closing region 4. The plait-like portion PP of the packaging P extends through the closing region 4 of the clipping tool assembly 100 along a filling axis AF. In Fig. 1, the filling axis AF is perpendicular to the picture plane. For illustrative purposes, the plait-like portion PP of the packaging P is schematically shown in the closing region 4 in Fig. 1, although the gathering unit 2 is not fully closed.

The gathering means 2 comprises a primary gathering tool 6 and a secondary gathering tool 8. In the embodiment of Fig. 1, the primary and secondary gathering tool 6, 8 are formed as gathering plates 10, 12. The gathering plates 10, 12 are arranged perpendicular to the filling axis AF and each comprise a gathering contour 14. A section of each of the gathering contours 14 of the gathering plates 10, 12 is tapered. These sections form so called tapered sections 16 of the gathering contours 14. On the base of each gathering contour a holding section 18 is provided.

For forming the plait-like portion PP of the packaging P, the primary gathering tool 6 is movable relative to the secondary gathering tool 8. Here, the secondary gathering tool 8 is a stationary gathering tool that is fixed to a main body 20 of the clipping tool assembly 1. In other embodiments, the stationary gathering tool 8 can be fixed to other components of the clipping tool assembly 1 and/or the packaging machine. The primary gathering tool 6 is reversibly movable along a gathering axis AG. In the embodiment shown in Fig. 1, the gathering axis AG is vertical. In the present example embodiment and preferably, the gathering axis AG and the filling axis AF are perpendicular to each other and intersect in the closing region 4. The first gathering plate 10 can be guide by one or more guide rails or the like.

In Fig. 1, the primary gathering tool 6 is shown in an intermediate position between a fully open position and a gathered position. In the fully open position, the primary gathering tool 6 is moved away from the secondary gathering tool 8 along the gathering axis AG such that a free width between the primary gathering tool 6 and the secondary gathering tool 8 is maximized. Preferably, the tapered sections 16 of the primary gathering tool 6 and the secondary gathering tool 8 overlap each other when the primary gathering tool 6 is in the fully open position. An overlap of the tapered sections 16 of the primary gathering tool 6 and the secondary gathering tool 8 prevents the packaging P from slipping out of a gathering space formed between the gathering tools 6, 8.

By moving the primary gathering tool 6 towards the secondary gathering tool 8 along the gathering axis AG, the free width is reduced as the oppositely oriented gathering contours 14 of the primary gathering tool 6 and the secondary gathering tool 8 overlap each other. It shall be understood that the primary gathering tool 6 is advanced towards the secondary gathering tool 8 and closely passes the secondary gathering tool 8. The primary gathering tool 6 and the secondary gathering tool 8 a preferably arranged in a scissor-like form in which only a very small gap is provided between the primary gathering tool 6 and the secondary gathering tool 8.

When the primary gathering tool 6 is in the gathered position, the holding sections 18 of the primary gathering tool 6 and the secondary gathering tool 8 overlap each other. The plait-like portion PP, which is formed by gathering the packaging P together through the motion of the primary gathering plate 10 relative to the secondary gathering plate 12, is then arranged in the overlapping holding sections 18 of the primary gathering tool 6 and the secondary gathering tool 8.

The gathering unit 2 is configured such that the overlapping holding sections 18 are aligned with the closing region 4 such that the plait-like portion extends through the closing region 4 of the clipping tool assembly 1. In the embodiment shown in Fig. 1, the packaging P is pushed into the closing region 4 along the gathering axis AG from a gathering side. This allows gathering of a large diameter packaging P to a comparably small plait-like portion PP.

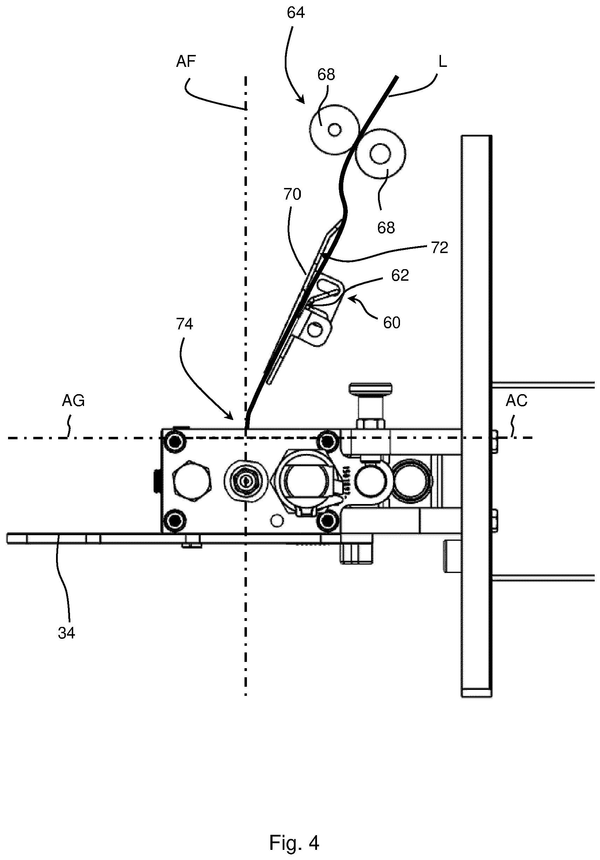

In a method of packaging a filling into a packaging P including a label L (cf. Fig. 4), a tubular section of packaging material P, which is closed at one end with a closure means, extends between the primary and secondary gathering tool 6, 8. While the primary gathering tool 6 is in a fully or partially open position, the filling is filled into the tubular section of packaging material. The primary gathering tool 6 is then advanced towards the secondary gathering tool 8 along the gathering axis AG such that the plait-like portion PP is formed in the closing region 4 of the clipping tool assembly 1. In a next step, the packaging P is closed at the plait-like portion P by a closure means such as a closure clip C.

For closing the closure clip C, the clipping tool assembly 1 comprises a first pair of clipping tools 24 including a primary clipping tool 25 and a secondary clipping tool 26. The clipping tool assembly 1 shown in Fig. 1 is a so-called double clipping tool assembly 1 that is configured to apply two closure clip C to the plait-like portion PP. The two closure clip C are preferably spaced apart from each other along the plait-like portion PP or the filling axis AF respectively. Applying two closure clip C at once, allows to close a first end of a subsequent packaging P while closing a second end of the filled packaging P. For closing the second clip C, the clipping tool assembly 1 comprises a second pair of clipping tools 28. Here, the first pair of clipping tools 24 and the second pair of clipping tools 28 each comprise a primary clipping tool 25 formed as a punch.

The punch of the second pair of clipping tools 28 engages a secondary clipping tool of the second pair of clipping tools 28 formed has a die. The embodiment of the clipping tool assembly 1 shown in the figures therefore comprises two pairs of clipping tools 24, 28 each including a punch 25 and a die 26.

In the preferred embodiment shown in the figures, the secondary clipping tools of the pairs of clipping tools 24, 28 are received in a die holder 27. The dies and die holder 27 are formed as separate elements but could also be formed as a single piece. The die holder 27 holds the dies of the pairs of clipping tools 24, 28. Preferably, each die is received in a corresponding die cavity of the die holder 27.

The holder 27 is movable along a die axis AD and carries the die 26 along the die axis AD such that the die 26 is also movable along the die axis AD. The die 26 and the die holder 27 jointly move along the die axis AD.

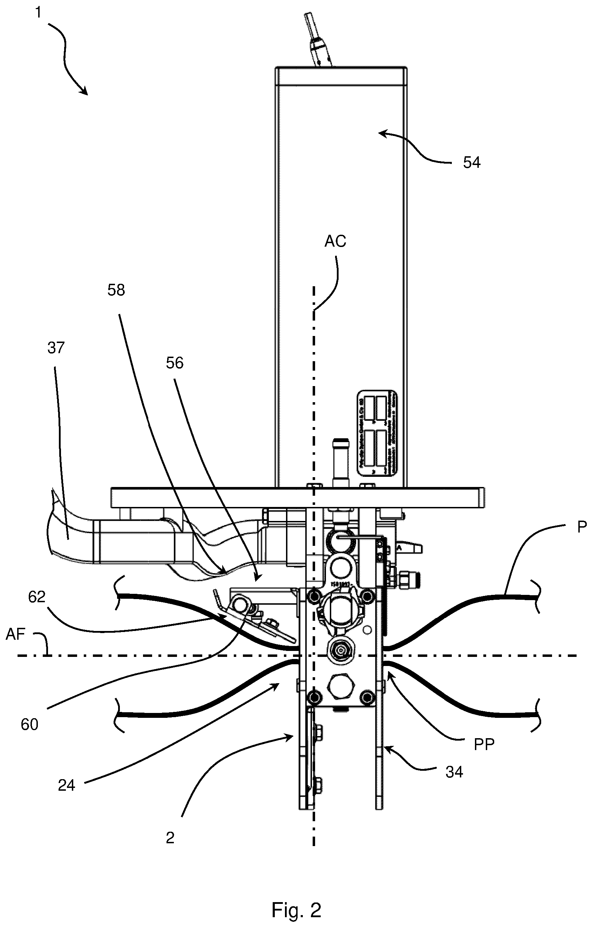

As shown in the side view of Fig. 2, the clipping tool assembly 1 further comprises a second gathering unit 34. The second gathering unit 34 may only comprises a stationary gathering tool. Alternatively or additionally, the second gathering unit 34 can comprise at least one movable gathering tool such as the primary gathering tool of the first gathering unit 2. The second gathering unit 34 preferably collaborates with the first gathering unit 2 for forming the plait-like portion PP. Preferably, the second gathering unit 34 moves uniformly with the gathering unit 2. Providing two gathering units 2, 34 on opposite sides of the clipping tool assembly 1 allows to hold the plait-like portion PP straight and facilitates application of the closure clip C to the plait-like portion P extending along the filling axis AF through the closing region 4.

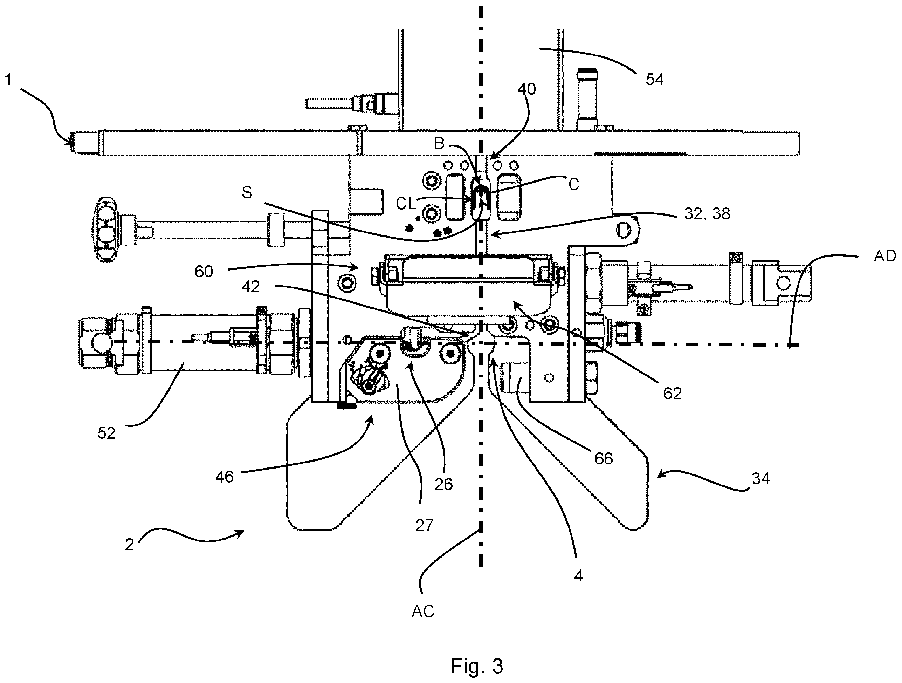

Fig. 3 shows a view of a section of the clipping tool assembly 1 along the filling axis AF. For illustrative purposes, the gathering unit 2 is not shown in Fig. 3. Operation of the clipping tool assembly 1 is described in the following with reference to the first pair of clipping tools 24. However, it shall be noted that the second pair of clipping tools 28 for closing the second closure clip C (the second clipping tool and the second die) can be substantially identical to means for closing the closure clip C described in the following.

Fig. 3 shows closure clip C in a clip window 36 through which the closure clip C is provided to first pair of clipping tools 24. For providing the clip C to the clip window 36, the clipping tool assembly 1 further comprises a clip bar 37, which has been omitted in Fig. 3 for illustrative purposes. From the clip window 36, the closure clip C is transported to the closing region 4 by the primary clipping tool 25 of the first pair of clipping tools 24 through a guide groove 38 in the main body 20 of the clipping tool assembly 1. The guide groove 38 defines a tool track 32 for guiding the primary clipping tool 25 along a closing axis AC. In Fig. 3, the closing axis AC is not shown in the clip window. However, it shall be noted that the closing axis AC extends through and past the clip window 36.

The primary clipping tool 24 is reversibly movable along the closing axis AC from an open position 40 to a closing position 42. The closing position 42 lies in the closing region 4. The clip window 36 is arranged between the open position 40 of the primary clipping tool 25 and the closing position 42 in a direction along the closing axis AC. The side from which the primary clipping tool 25 advances towards the closing region is referred to as the tool side of the clipping tool assembly 1. Here the tool side is opposite a gathering side. This arrangement allows for a very compact design and can facilitate gathering of the packaging P.

In Fig. 3, the secondary clipping tool 26 or die 26 respectively is shown in a neutral position 46. In the neutral position 46 the die 26 is removed from the closing region 4 and allows the plait-like portion PP of the packaging P to be provided into the closing region 4 from the gathering side. As shown in Fig. 3, the die holder 27 can be removed from the closing region 4. When removed from the closing region 4, the die 26 and the die holder 27 do not overlap the free area of the gathering unit 2 defined by the gathering contour 14. The die 26 is reversibly movable from the neutral position 46 to an engagement position in the closing region 4. In this engagement position, the die 26 is positioned on the closing axis AC. For moving the die 26 between the neutral position 46 and the engagement position a die drive 52 is provided. Here, the die drive 52 acts on the die holder 27. Preferably, the die drive 52 and a tool drive 54 for driving the primary clipping tool 25 are pneumatic drives. In other embodiments, electric drives or motors, magnetic drives, hydraulic drives or the like could also be used. Here, the die holder 27 is guided along the die axis AD to ensure linear movement.

As shown in Fig. 3, the die holder 27 is substantially u-shaped when viewed along the filling axis AF or perpendicular to the die axis AD and the closing axis AC respectively. An open side of the u-shaped die holder 27 is oriented towards the closing region 4 when the die 26 and the u-shaped die holder 27 are in the neutral position 46. When in the engagement position 48, the u-shaped die holder 27 surrounds the closing region 4 on three sides. The die 26 is positioned in the closing region 4 when the die 26 is in the engagement position. Preferably, the die 26 has a surface configured for engaging the clip C that is positioned at the intersection of the die axis AD and the closing axis AC when the die 26 is in the engagement position. The closure clip C can be pushed against the die surface of the die 26 by the primary clipping tool 25 such that the closure clip C is closed around the plait-like portion PP of the packaging P. In the present embodiment, the die surface is substantially semi-circular when viewed perpendicular to the die axis AD and the closing axis AC. In other embodiments, the die 26 could also have other shapes. Preferably, the die 26 comprises grooves or the like to guide clip legs CL of the closure clip C during its deformation.

For guiding the die 26 and the die holder 27 along the die axis AD, the clipping tool assembly 1 can comprise one or more guide rails. The guide rails can be attached to the main body 20. For supporting the die holder 27 in the engagement position of the die 26, the clipping tool assembly 1 can comprise a support 66. The die holder 27 can have a corresponding recess in which the support 66 is received when the die 26 is in the engagement position. Loads provided to the die 26 and the die holder 27 by the primary clipping tools of the first and second pair of clipping tools 24, 28 when closure clip C are closed are transferred to the support. This can prevent damages to the die 26 and/or the die holder 27.

When the dies 26 are in the engagement positon, they are in a position that lies on the closing axis AC of the respective primary clipping tool 25. The closing process described above then commences. In the shown embodiment and preferably, the tool drive 52 actuates both primary clipping tools of the first and second pair of clipping tools 24, 28. In a preferred embodiment of the closing process, the dies 26 and the primary clipping tools 25 of the first and second pair of clipping tools 24, 28 are moved after another. The tool drive 52 moves the primary clipping tools 25 of the first and second pair of clipping tools 24, 28 from their respective open position 40 to respective clip windows 36 at which a closure clip C is provided to the respective guide grooves 38 for each of the primary clipping tools 25 of the first and second pair of clipping tools 24, 28. For providing closure clip C to the clip window of the second pair of clipping tools 28, a second magazine bar can be provided.

The primary clipping tools 25 of the first and second pair of clipping tools 24, 28 transport their respective closure clip C along their respective guide groove 38 towards the closing region 4. In the closing region 4, the closure clip C are positioned around the plait-like portion PP of the packaging P. For closing the packaging, the primary clipping tools 25 of the first and second pair of clipping tools 24, 28 press the respective closure clip C against the die surface of the corresponding die 26 of the first and second pair of clipping tools 24, 28. After the closure clip C have been closed, the tool drive 54 retracts the primary clipping tools 25 of the first and second pair of clipping tools 24, 28 back to their respective open positions 40.

The clipping tool assembly 1 is further configured to secure a label L to the packaging P. Here, the label L is secured to the packaging P by the closure clip C during the above-described closing operation, in particular by the closure clip C attached to the plait-like portion PP by the first pair of clipping tools 24. For providing and handling the label L, the clipping tool assembly 1 comprises a label handling arrangement 56.

The label handling arrangement 56 comprises a label feed 58. The label feed 58 is configured to provide a label 58 to the closing region 4. As shown in Fig. 2, the label feed 58 preferably comprises a feed support 60 that is configured to support a label L (the label is not shown in Figs. 1 to 3). The label feed 58 can further comprise a label drive 64 that is configured to drive a label L or a string of labels. For example and preferably, the label drive 64 can comprise a set of driver rollers 68. The drive rollers 68 can engage a label L or a string of labels on opposite sides. By rotating the drive rollers in opposite directions, the label drive can advance the label L or the string of labels towards the feed support 60 and to the closing region 4.

As best shown in Fig. 2, the feed support 60 can be fixed to the main body 20 of the clipping tool arrangement 1. Preferably, a support surface 62 of the feed support 60 is angled with respect to the filling axis AF. Here the support surface 62 and the filling axis AF are provided at an angle of about 30°. Preferably, the angle of the support surface 62 and the filling axis AF is adjustable, preferably in a range of 0° (support surface 62 parallel to filling axis AF) and 60°, more preferred in a range of 0° to 45°.

Fig. 4 shows a side view of the clipping tool arrangement 1. For illustrative purposes, some parts of the clipping tool arrangement 1 have been omitted in Fig. 4. For example, the parts of the label feed 58 can be supported on a housing of a clipping machine or an element of the clipping tool arrangement 1 by corresponding support elements 1, which are not shown in Fig. 4. Moreover, the drive rollers 68 can be arranged on shafts that may be supported on a housing or the like. One or more bearings can be provided between the driver rollers 68 and their respective shaft. Preferably, a roller drive can be provided for driving at least one of the driver rollers 68. A motor of a drive roller can be provided within the drive roller 68. In other embodiments, a drive roller 68 can be driven via a gear or a driven shaft, to which the roller is attached.

The label feed 58 further comprises a holding plate 70. A holding surface 72 of the holding plate 70 is oriented towards the support surface 62 of the feed support 60. As shown in Fig. 4, a string of labels can extend between the drive rollers 68 of the label drive 64 and between the holding surface 72 and the support surface 62. From the label support 60, the string of labels L extends into the closing region 4. A string of labels is formed by a plurality of labels L connected to each other in a longitudinal orientation.

Preferably, the feed support 60 is configured to clamp the string of labels L. In particular, the feed support 60 can be configured to clamp the string of labels L or a single label L during the closing operation. If the label L is clamped by the feed support 60 while the closure clip C is attached to the plait-like portion PP, unintended movement of the label L can be prevented. In the embodiment shown in the figures and preferably, the feed support 60 is configured to clamp the label L between the support surface 62 and the holding surface 72. For clamping the label L, the holding plate 70 can be moved towards and away from the support surface 62. Preferably, the holding plate 70 can be pivoted such that at least a portion of the holding plate 70 can be advance towards and away from the support surface 62. Rotation of the holding plate 70 can be effected by a rotational drive or the like. Preferably, the label feed 58 comprises a clamping lever (not shown in the figures) that is configured to press the holding plate 70 against the support surface 62. The holding plate 70 is preferably biased away from the support surface 62. The holding plate 70 can then automatically return to an open position of the feed support 60. In the open position of the feed support 60 a new label L can be advanced to the closing region 4 while in a closed position of the feed support 60 the label L is clamped.

Fig. 4 illustrates that a label L is provided to the closing region 4 such that its label length extends substantially parallel to the filling axis AF. In the preferred embodiment, the label handling arrangement 56 is configured to provide the label L to the closing region 4 in a first orientation 74. In the first orientation 74, a label width of the label L extends substantially perpendicular to the closing axis AC. In the preferred configuration shown in the figures, the closing axis AC and the gathering axis AG are parallel. The label width of the label L then extends substantially perpendicular to the gathering axis AG in the first orientation 74.

The closure clip C shown in Fig. 3 is a closure clip C having a spike S. The spike S extends from a clip base B of the closure clip C between two clip legs CL of the closure clip C. A closure clip C including a spike S is particularly suitable for closing net bags or the like, since the spike S can extend into a cell of such a net bag and can therefore ensure secure attachment of the closure clip C to the packaging P. However, if the label L were placed between the plait-like portion PP and the closure clip C with its label width extending substantially perpendicular to the closing axis AC, the spike S needs to penetrate the label L in order to extend into the plait-like portion PP. If the label L is not penetrated, the positive effect of the spike S on the attachment of the closure clip C to the plait-like portion PP may not be fully achieved. On the other hand, structural integrity of the label L is significantly reduced if the label L is punctured by the spike S of the closure clip C.

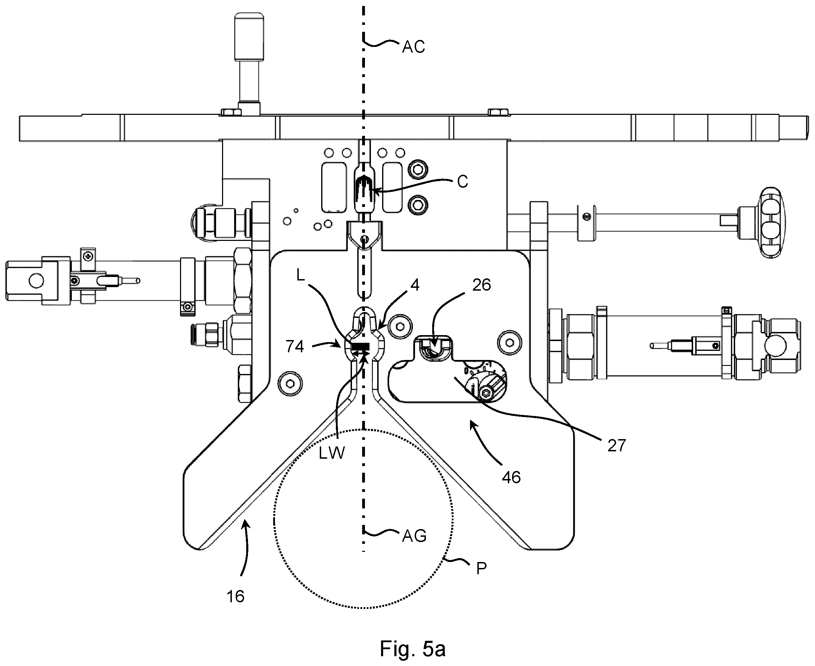

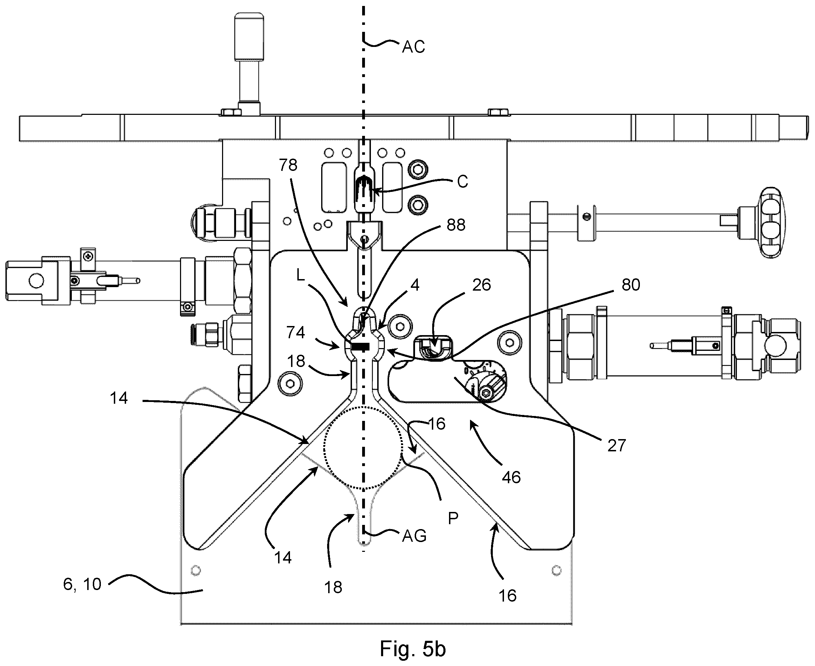

The preferred embodiment of the clipping tool assembly 1 avoids these problems and enables secure closure of a packaging P without compromising the structural integrity of the label L. Preferably, the label handling arrangement 56 is configured to allow reorientation of the label L from the first orientation 74 to a second orientation 76 during gathering of the packaging P to the plait-like portion PP. Preferably, the shifting motion from the first orientation 74 to the second orientation 76 is or includes a rotation of the label L about its longitudinal label axis. The shifting motion of the label L from the first orientation 74 to the second orientation 76 is described in further detail with regard to Fig. 5a to Fig. 5e.

Fig. 5a to Fig. 5e each show a back view of the clipping tool assembly 1 along the filling axis AF. To allow an unobstructed view of the closing region 4, multiple elements of the clipping tool assembly 1 have been omitted in Fig. 5a to Fig. 5e. Fig. 5a shows the label in its first orientation 74. The label length of the label L extends along the filling axis AF and therefore perpendicular to the plane of Fig. 5a. A label width LW is oriented substantially perpendicular to the closing axis AC and the gathering axis AG. In Fig. 5a the label L is shown having a significant label thickness for illustrative purposes. In reality, the label thickness of the label L may be much smaller than the label width LW.

In the configuration shown in Fig. 5a, the die 26 is moved to its neutral position 46. Only the first secondary gathering tool 8 of the second gathering unit 34 is shown. The primary gathering tool 6 of the second gathering unit 34 is not shown as the second gathering unit 34 is fully open. The packaging P is illustrated by a dotted line. In Fig. 4, the packaging P has not been gathered and has a large diameter. The closure clip C is shown in the clip window 36 and the primary clipping tool of the second pair of clipping tools 28 is fully retracted away from the closing region 4 to its open position 40.

As illustrated in Fig. 5a to Fig. 5e, the gathering units 2, 34 are configured to gather the packaging P into the plait-like portion PP and to arrange the plait-like portion PP in the closing region 4. In the configuration of Fig. 5a, the packaging P can be filled with large filling pieces, for example oranges or other large produce. After the packaging P has been filled, the primary gathering tool 6 advances towards the secondary gathering tool 8. The packaging P is received in a gathering space defined between the primary gathering tool 6 and the secondary gathering tool 8, in particular the gathering space defined between the gathering contours 14 of the primary and secondary gathering tools 6, 8.

Preferably, the primary gathering tool 6 performs a linear motion towards the secondary gathering tool 8 along a straight gathering axis AG. As the primary gathering tool 6 moves towards the secondary gathering tool 8, the gathering space becomes smaller and smaller. The overlapping gathering contours 14 of the gathering tools 6, 8 prevent the packaging P from leaving the gathering space such that the packaging P is gathered.

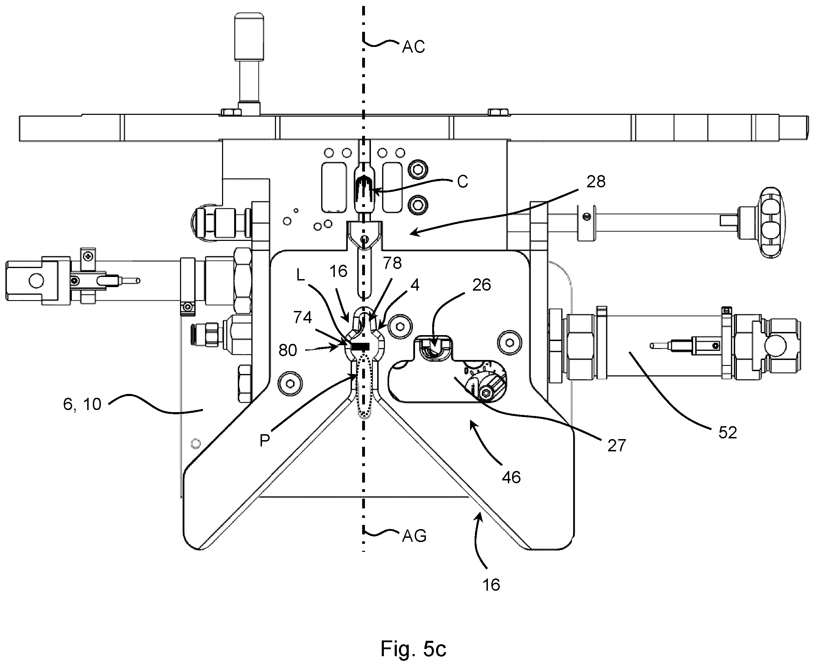

As shown in Fig. 5c, the primary gathering tool 6 can substantially overlap or even pass by the secondary gathering tool 8. In the present disclosure, this is still referred to as a movement of the primary gathering tool 6 towards the secondary gathering tool 8. When the primary gathering tool 6 has advanced towards the secondary gathering tool 8 so far that there is no longer an overlap of their respective tapered sections 16, the gathered packaging P is pushed into holding sections 18 of the primary and secondary gathering tools 6, 8. At this point, the packaging P has already been gathered substantially.

Preferably and as shown in the figures, the gathering contour 14 of the primary gathering tool 6 defines a narrow portion 78 and a wide portion 80. The width of the narrow portion 78 and the wide portion 80 is measured transverse to the closing axis AC and/or the filling axis AF. Here, the narrow portion 78 and the wide portion 80 are both part of the holding section 18 of the primary gathering tool 6. The narrow portion 78 is provided between the wide portion 80 and the open position 40 of the primary clipping tool 25 along the closing axis AG.

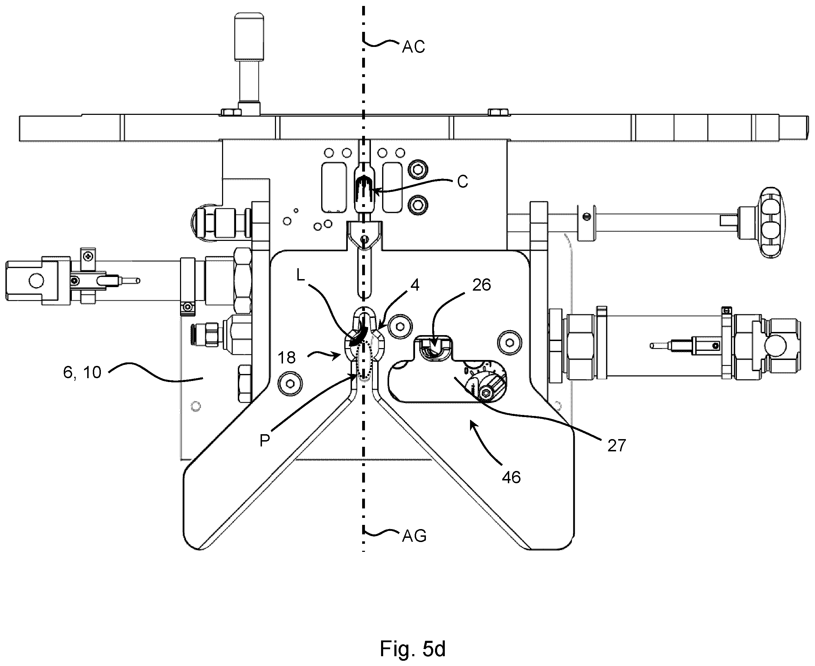

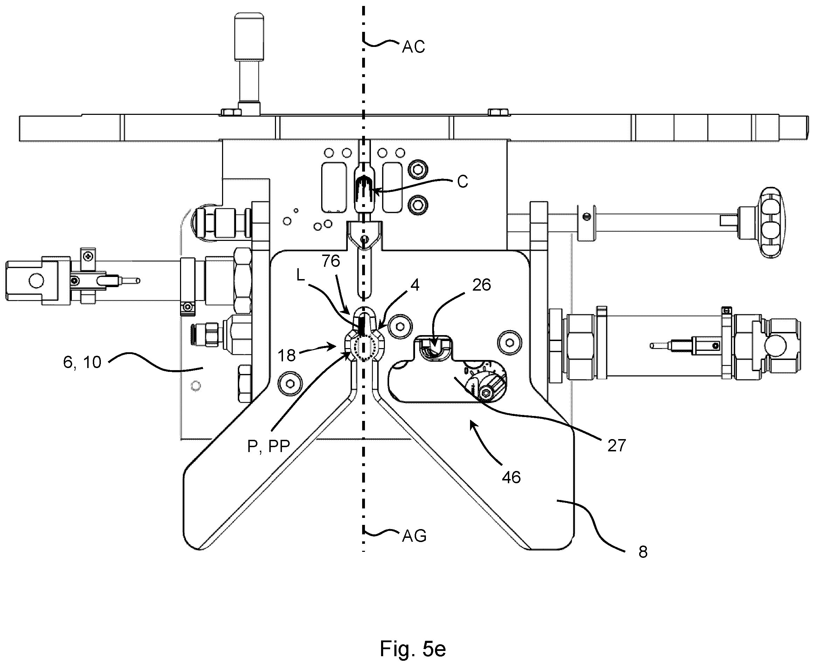

In Fig. 5a to Fig. 5c, the label L is shown in the closing region 4 in its first orientation 74. At a certain point of the movement of the primary gathering tool 6 towards the secondary gathering tool 8, the primary gathering tool 6 pushes the packaging P into contact with the label L. The label handling arrangement 56 is configured to allow shifting of the label L from the first orientation 74 to the second orientation 76. As shown in Fig. 5d, the packaging P pushes one side of the label L along the gathering axis AG. Thereby, the packaging P shifts the orientation of the label L away from the first orientation 74. In the preferred embodiment shown in the figures, the shifting motion of the label L is a rotation of the label L around its longitudinal label axis (perpendicular to the picture plane of Fig. 5a to 5e) by about 90°. Fig. 5e shows the fully gathered packaging P. The packaging P which has been gathered to the plait-like portion PP is positioned in the closing region 4 and the orientation of the label L has been shifted to the second orientation 76.

In the second orientation 76, the label width of the label L extends substantially parallel to the closing axis AC. Therefore, only small surface of the label defined by a label thickness of the label L is exposed towards the closure clip C and the primary clipping tool 25. Preferably, the label L is provided adjacent the closing axis AC in the second orientation 76. As the closure clip C of the present embodiment is symmetrical and the spike S is provided on a symmetry axis of the closure clip C, the positioning of the label L adjacent the closing axis AC (or not on the closing axis AC respectively) prevents the spike S from puncturing the label L, when the primary clipping tool 25 presses the closure clip C against the die 26 to close the closure clip C around the plait-like portion PP. Preferably, the label L is provided in the wide portion 80 of the closing region 4 in its first orientation 74 and in the narrow portion 78 of the closing region 4 in its second orientation 76.

After gathering of the packaging P into the plait-like portion PP, the closure-clip C can be closed around the plait-like portion PP to close the packaging P and to secure the label L to the packaging P. As described above, the primary clipping tool 25 pushes the closure clip C from the clip window 36 towards the closing region 4 along the closing axis AC. Simultaneously, the die 26 is moved into the closing region 4 together with the die holder 27 by the die drive 52.

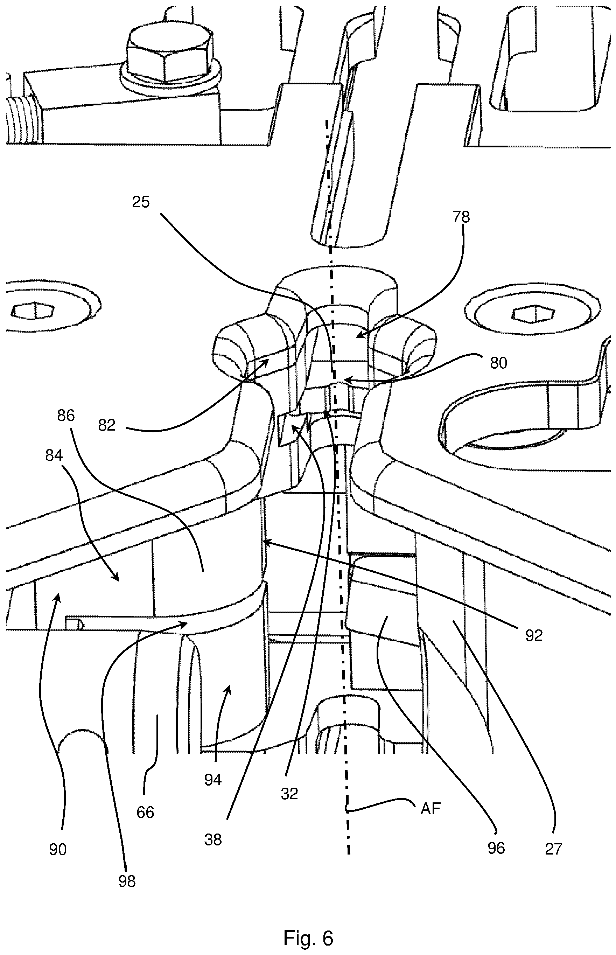

Fig. 6 shows a detail of a section of the clipping tool assembly 1 including the closing region 4. As shown in Fig. 6, the primary clipping tool 25 or punch respectively is guided in the tool track 32 defined by the guide groove 38. The tool track 32 is configured such that legs CL of the closure clip C are received in the guide groove 38 on opposite sides of the tool track 32. The base of the closure clip C connects the legs CL across the narrow portion 78. The tool track 32 extends along the narrow portion 78 of the closing area 4 but terminates before the wide portion 80 of the closing area. In particular, the guide grooves 38 open into a transition 82 between the narrow portion 78 and the wide portion 80. In the wide portion 80 the legs of the closure clip C are exposed. By providing the label L in the narrow portion 78, puncturing of the label L by the legs CL of a closure clip C can be prevented. Preferably, the plait-like portion PP is also gathered in the narrow portion 78 of the closing region 4. This can help to ensure that the legs of the closure clip C pass the plait-like portion PP such that the plait-like portion PP is received at the base of the closure clip C. When the punch 25 presses the closure clip C against the die 26, the legs of the closure clip C are deformed such that the closure clip C fully surrounds the plait-like portion PP.

Fig. 6 further shows a label guide 84 of the label handling arrangement 56. The label guide 84 is configured to guide the label L during its shifting motion form the first orientation 74 to the second orientation 76. The label guide 84 comprises a guide head 86. In a guide position 88 shown in Fig. 6, the guide head 86 preferably extends into the closing region 4. In the preferred embodiment shown in the figures, the guide head 86 extends partially into the closing region 4 from a lateral side with respect to the closing axis AC. The guide head 86 comprises a first guide surface 90 and a second guide surface 92. The first guide surface 90 is configured to guide the label L in its first orientation 74 and the second guide surface 90 is configured to guide the label L in its second orientation 76. Here, the first guide surface 90 and the second guide surface 92 of the guide head 86 are perpendicular to each other. A curved guide surface 94 extends between the first guide surface 90 and the second guide surface 92. The curved guide surface 94 supports at least part of the label L during the shifting motion from the first orientation 74 to the second orientation 76.

As shown in Fig. 6, the label guide 84 is at least partially sandwiched between the first pair of clipping tools 24 and the second pair of clipping tools 28 when viewed along the filling axis AF.

For separating a filled and closed packaging P from the supply of packaging material, the clipping tool assembly 1 comprises a cutting device. The cutting device comprises a blade 96 configured for severing the plait-like portion PP. The blade 96 is movable, in particular movable perpendicular to the closing axis AC, for cutting the plait-like portion PP between two closure clips C attached to the plait-like portion PP by the first and second pair of clipping tools 24, 28. For example, a pneumatic drive may be provided for moving the blade 96. Similar to the guide head 86, the blade 96 is also sandwiched between the first and second pair of clipping tools 24, 28 with regard to the filling axis AF. A blade groove 98 is provided in the guide head 86. The blade groove 98 is configured to at least partially receive the blade 96 of the cutting device.

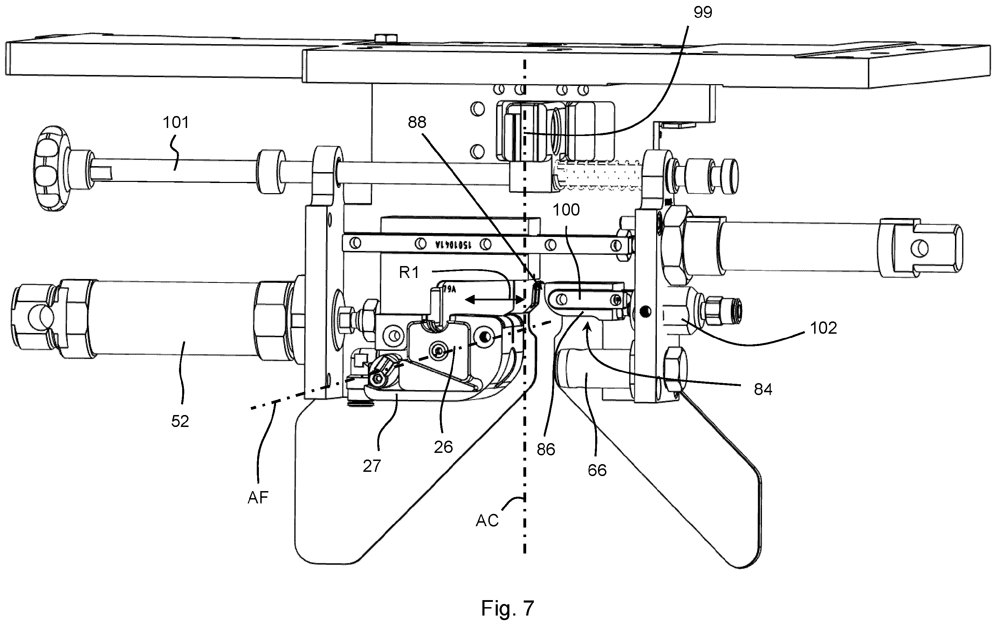

Fig. 7 shows a front view of the clipping tool assembly 1. To allow an unobstructed view of the label guide 84, the gathering units 2 and some other elements of the clipping tool assembly 1 have been omitted. The die holder 27 is shown without a cover plate such that the die 26 is visible in Fig. 7. The die 26 is received in a die cavity of the die holder 27. A height of the die 26 is preferably adjustable via a wedge and an eccentric.

The clipping tool assembly 1 further comprises a support unit 99. In the operation position shown in Fig. 7, the support unit 99 is provided behind the clip window 36 and at least partially defines a portion of the tool track 32. The support unit 99 is preferably movable away from the clip window 36 to a removal position for removing the closure clip C, if necessary. This arrangement facilitates removal of a closure clip C or part of a closure clip C that is stuck in the tool track 32. In the present embodiment and preferably, the support unit 99 is manually movable. The support unit 99 is fixed on a shaft 101 operable by means of a handle. Preferably, the support unit 99 is biased into the operation position by a spring or the like. A pin or any other fixation device can be provided for fixing the support unit 99 in the operation position.

As illustrated in Fig. 7, the label guide 84 comprises a guide rail 100. A second guide rail 100 provided on the opposite side of the guide head 86 is not shown. The guide rail 100 is stationary. In the embodiment of Fig. 7, the guide rail 100 is fixed to a stationary gathering tool of the clipping unit of the clipping tool assembly 1. In other embodiments, the guide rail 100 could be fixed to any other stationary element of the clipping tool assembly 1, for example a frame, the main body 20 or the like. The guide head 86 comprises a groove for receiving the guide rail 100. The guide rail 100 is received in this groove such that the guide rail 100 allows movement of the guide head 86 in a first direction and prevents movement of the guide head 86 in other directions. In the embodiment shown in Fig. 7 and preferably, the guide head 86 is movable in a first direction perpendicular to the filling axis AF and the closing axis AC.

For moving the guide head 86, the label guide 84 comprises a label guide actuator 102. Preferably, the label guide actuator 102 is a pneumatic drive. Here, the label guide actuator 102 includes a pneumatic cylinder and a pneumatic piston. The guide head 86 is attached to a piston shaft of the label guide actuator 102 such that the guide head 86 can be moved in the first direction by providing pressurized air or by providing a vacuum to the pneumatic cylinder of the label guide actuator 102.

The label guide actuator 102 is configured to move the guide head 86 from the guide position 104 shown in Fig. 7 to a retracted position. In the retracted position, the guide head 86 is moved away from the closing region 4. By providing a movable guide head 86, the label guide 84 can be disengaged during the production of products that do not require a label L.

Preferably, the guide head 86 of the label guide 84 is displaceable or deflectable respectively in the first direction R1 by the plate-like portion PP. The plait-like portion PP can move the guide head 86 in the first direction R1 without a corresponding action of the label guide actuator 102. The label guide 84 is preferably yielding in the first direction R1. During gathering of the plait-like portion PP, the plait-like portion PP pushes the label against the guide head 86. The guide head 86 deflects away from the guide position 104 towards the retracted position. Preferably, the guide head 86 is deflectable in the first direction R1 in a range of larger 0 mm to 30 mm, preferably larger 0 mm to 20 mm, particularly preferred 0 mm to 10 mm. By deflecting the guide head 86 in the first direction R1, the label L can be cushioned by the guide head 86. Moreover, the shifting motion of the label L can be facilitated. The risk that the label L is folded or crumpled is reduced.

In the present embodiment and preferably, the actuator 102 of the label guide 84 is configured to allow a play of its piston in a range of 0 to 20mm, preferably 0 to 10 mm, in the first direction R1. Preferably, the actuator 102 is configured to act as a pneumatic damper.

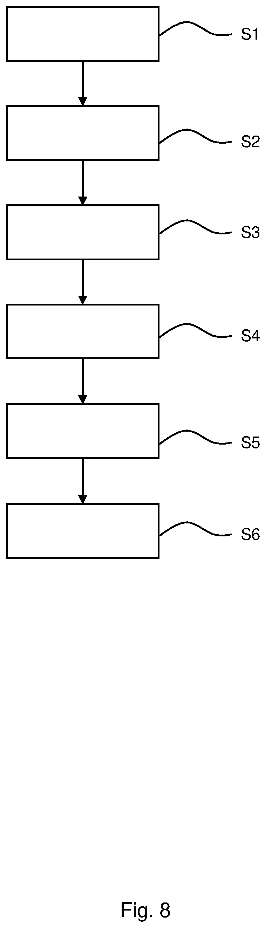

Fig. 8 illustrates a method 200 for packaging a filling into a packaging P including at least one label L. In the following, the method 200 is described with reference to a clipping machine having a clipping tool assembly 1 as shown from Fig. 1 to Fig. 7. It shall however be noted, that the method 200 can be performed with other clipping machines as well.

In a first step S1 of the method 200, a tubular or bag-shaped packaging P is provided. The packaging P is closed at a first packaging end. Preferably, the first packaging end of the packaging P is closed by a closure clip C. For example, the closure clip C can be provided to the first packaging end in a previous iteration of the method 200, by hand or by providing a corresponding instruction to a clipping machine having a clipping tool assembly 1. In a second step S2, products are filled into the packaging along a filling axis AF from a second packaging end of the packaging P opposite the first packaging end. For example, oranges can be filled into a net bag closed at a first end by a closure clip.

In a third step S3, a label L is provided to the closing region 4 in the first orientation 74. Although the steps S1 to S3 are shown in consecutive order, the third step S3 could also be performed before or simultaneously with any of the first or second steps S1, S2. In a fourth step S4, a portion of the packaging is gathered into a plait-like portion PP with one or more gathering units 2, 34. During or after the gathering step S4, the label L is shifted from the first orientation 74 to the second orientation 76 by the plait-like portion in a fifth step S5. After the gathering step S4 and the shifting of the label (step S5), a primary clipping tool 25 of the clipping tool arrangement 1 is moved along the closing axis AC towards the die 26 in a sixth step S6. The clipping tool 25 moves a closure clip C along the tool track 32. Legs of the closure clip C are provided around the plait-like portion PP. The primary clipping tool 25 then pushes the closure clip C against the die 26 such that the legs of the closure clip C are deformed around the plait-like portion PP for closing the packaging P at its second packaging end. The label is also received between the legs of the closure clip C. The label preferably extends parallel to a leg of the closure clip C before the leg is deformed. After its deformation, the closure clip C secures the label L to the plait-like portion PP without penetrating the label L.

### List of reference signs

- 1: clipping tool assembly
- 2: gathering unit
- 4: closing region
- 6: primary gathering tool
- 8: secondary gathering tool
- 10: first gathering plate
- 12: second gathering plate
- 14: gathering contour
- 16: tapered section
- 18: holding section
- 20: main body
- 24: first pair of clipping tools
- 25: primary clipping tool
- 26: secondary clipping tool, die
- 27: die holder
- 28: second pair of clipping tools
- 32: tool track
- 34: second gathering unit
- 36: clip window
- 38: guide groove
- 40: open position
- 42: closing position
- 46: neutral position
- 52: die drive
- 54: tool drive
- 56: label handling arrangement
- 58: label feed
- 60: feed support
- 62: support surface of feed support
- 66: support
- 68: drive roller
- 70: holding plate
- 72: holding surface
- 74: first orientation
- 76: second orientation
- 78: narrow portion
- 80: wide portion
- 84: label guide
- 86: guide head
- 88: guide position
- 90: first guide surface
- 92: second guide surface
- 94: curved guide surface
- 96: blade
- 98: blade groove
- 99: support unit
- 100: guide rail
- 101: shaft
- 102: label guide actuator
- 104: guide position
- AC: closing axis
- AD: die axis
- AF: filling axis
- AG: gathering axis
- B: base of closure clip
- C: closure clip
- CL: leg
- L: label
- LW: label width
- P: packaging
- PP: plait-portion PP
- R1: first direction
- S: spike of closure clip
- S1, S2, S3:
- S4, S5, S6: steps

## Claims

1. A clipping tool assembly (1) for closing at least one closure means, like a closure clip (C), in a packaging machine for closing tubular or bag-shaped packaging (P) containing filling, in particular a loose filling like fruit or vegetables, the clipping tool assembly (1) comprising:
a gathering unit (2, 34) for forming a plait-like portion (PP) of a packaging (P), the gathering unit (2, 34) comprising a primary gathering tool (6) and a secondary gathering tool (8), wherein the primary gathering tool (6) is movable towards the secondary gathering tool (8) for gathering the packaging (P) in a closing region (4) and for forming the gathered packaging into a plait-like portion (PP),
a clipping tool arrangement comprising a first pair of clipping tools (24) including a primary clipping tool (25) and a secondary clipping tool (26) for applying at least one closure means to a plait-like portion (PP) provided in the closing region (4) by linearly reversibly moving the primary clipping tool (25) along a closing axis (AC) towards the secondary clipping tool (26), and
a label handling arrangement (56) for positioning a label (L) to be attached to a packaging (P) by a closure clip (C) in the closing region (4),
wherein the label handling arrangement (56) is configured to allow reorientation of a label (L) from a first orientation (74) to a second orientation (76) during gathering of a packaging to a plait-like portion (PP).

2. The clipping tool assembly (1) of claim 1, wherein a label width of a label (L) provided in the closing region (4) extends substantially transverse to the closing axis (AC) in the first orientation (74) and substantially parallel to the closing axis (AC) in the second orientation (76).

3. The clipping tool assembly (1) of claim 1 or 2, wherein the label handling arrangement (56) comprises a label guide (84) configured to guide a label (L) provided in the closing region (4) during reorientation from the first orientation (74) to the second orientation (76), wherein the label guide (84) is preferably configured to guide the label (L) such that during gathering of the packaging (P), an at least partially gathered packaging (P) reorients the label (L) from the first orientation (74) to the second orientation (76).

4. The clipping tool assembly (1) of claim 3, wherein the label guide (84) comprises a guide head (86), wherein the guide head (86) preferably comprises a first guide surface (90) extending parallel to the first orientation (74) and a second guide surface (92) extending parallel to the second orientation (76) of a label (L).

5. The clipping tool assembly (1) of claim 4, wherein the guide head (86) of the label guide (84) is displaceable in at least a first direction (R1) by a plait-like portion (PP).

6. The clipping tool assembly (1) of claim 5, wherein the guide head (86) is movable along a label guide axis from a retracted position to a guide position (88) for guiding a label (L) provided in the closing region (4), wherein the label guide (84) preferably comprises an actuator (102) for moving the guide head (86) from the retracted position to the guide position (88).

7. The clipping tool assembly (1) of any of claims 5 or 6, wherein the clipping tool assembly (1) further comprises a second pair of clipping tools (28), spaced from the first pair of clipping tools (24) along a filling axis (AF), and wherein the guide head (86) is at least partially sandwiched between the first pair of clipping tools (24) and the second pair of clipping tools (28) along the filling axis (AF).

8. The clipping tool assembly (1) of any of claims 5 to 7, further comprising a cutting device for severing a plait-like portion (PP), wherein the guide head (86) comprises a blade groove (98) for at least partially receiving the cutting device.

9. The clipping tool assembly (1) of any of the previous claims, wherein the primary gathering tool (6) is movable towards the secondary gathering tool (8) along a gathering axis (AG), and wherein the closing axis (AC) and the gathering axis (AG) are substantially parallel to each other.

10. The clipping tool assembly (1) of any of the previous claims, wherein the primary gathering tool (6) comprises a gathering contour (14), wherein the gathering contour (14) defines a narrow portion (78) and a wide portion (80) of the closing region (4), wherein the narrow portion (78) of the closing region (4) is located upstream of the wide portion (80) with regard to a travel of the primary clipping tool (25) along the closing axis (AC) towards the secondary clipping tool (26), wherein the clipping tool arrangement (1) preferably comprises a tool track (32) guiding the primary clipping tool (25) at least along a portion of its travel along the closing axis (AC) from an open position towards a closing position (42), wherein the narrow portion (78) is preferably provided in the tool track (32), and wherein the wide portion (80) is preferably provided adjacent the tool track (32).

11. The clipping tool assembly (1) of claim 10, wherein the label handling arrangement (56) is configured such that a label (L) is provided in the wide portion (80) of the closing region (4) in the first orientation (74) and such that the label (L) is pushed to the narrow portion (78) of the closing region (4) in the second orientation (76) by the plait-like portion (PP) upon actuation of the gathering unit (2, 34).

12. A clipping machine including a clipping tool assembly (1) according to any of the previous claims.

13. A method (200) for packaging a filling into a packaging (P) including at least one label (L) with a clipping machine, preferably a clipping machine according to claim 12, the method (200) comprising the steps of:
- Providing a tubular or bag-shaped packaging (P) closed at a first packaging end;
- Filling products into the packaging (P) along a filling axis (AF);
- Providing a label (L) extending along the filling axis (AF) in a first orientation (76) in a closing region (4) defined by a clipping tool assembly (1) of the clipping machine, wherein a label width of the label (L) extends transverse to a closing axis (AC) of the clipping tool assembly (1);
- Gathering a portion of the filled packaging into a plait-like portion (PP) with a gathering unit (2, 34);
- Reorienting the label from the first orientation (74) to a second orientation (76) with the plait-like portion (PP); and
- Moving a primary clipping tool (25) of the clipping tool arrangement (1) along the closing axis (AC) towards a secondary clipping tool (26) of the clipping tool arrangement (1) for applying a closure means (C) to the plait-like portion (PP) such that the packaging (P) is closed at a second packaging end opposite the second packaging end, wherein the label (L) is secured to the plait-like portion (PP) by the closure means (C);
wherein in the second orientation (76) of the label (L) the label width (LW) of the label (L) extends substantially parallel to the closing axis (AC).

14. The method of claim 13, wherein in the second orientation (76) the label is positioned such that the closure means (C) does not penetrate the label (L).

15. The method of claim 14, wherein a closure means (C) comprises a base (B), two legs (CL) extending from opposite ends of the base (B) and at least one spike (S) extending from the base (B) in between the legs (CL), wherein a label (L) is received between the spike (S) and one of the legs (CL) upon closure of the closure means by the clipping tools (25, 26).
